# EUROPÄISCHE PATENTANMELDUNG

(11) **EP 2 130 425 A1**
(43) Veröffentlichungstag der Anmeldung: **09.12.2009**
(21) Anmeldenummer: 09160214.4
(22) Anmeldetag: 14.05.2009
(51) Int. Cl.: A01F 29/20

(54) **Häckseltrommelanordnung**

(30) Priorität: 03.06.2008 DE 102008002172
(71) Anmelder: Deere & Company, Moline, IL 61265-8098 (US)
(72) Erfinder: Pakura, Franz, 18059, Ziesendorf (DE)
(74) Vertreter: Holst, Sönke

(57) **Zusammenfassung**

Die Erfindung bezieht sich auf eine Häckseltrommelanordnung mit:
einer Häckseltrommel (22), die um ihre Längsachse drehbar abgestützt und antreibbar ist und um ihren Umfang verteilte Messer (44) aufweist, und
einem die Häckseltrommel (22) umschließenden Gehäuse (30), das einen Einlass (48) für zu häckselndes Material, einen Auslass (56) für gehäckseltes Material und eine weitere, sich axial zur Häckseltrommel (22) über die Breite des Gehäuses (30) erstreckende, während des Häckselbetriebs öffenbare Öffnung (58) aufweist, durch die Luft von außen in den Innenraum des Gehäuses (30) einströmen kann.

Es wird vorgeschlagen, dass die Öffnung (58) bezüglich der beim Häckselbetrieb geltenden Drehrichtung der Häckseltrommel (22) zwischen dem Auslass (56) und dem Einlass (48) angeordnet ist.

## Beschreibung

Die Erfindung betrifft eine Häckseltrommelanordnung mit:
einer Häckseltrommel, die um ihre Längsachse drehbar abgestützt und antreibbar ist und um ihren Umfang verteilte Messer aufweist, und
einem die Häckseltrommel umschließenden Gehäuse, das einen Einlass für zu häckselndes Material, einen Auslass für gehäckseltes Material und eine weitere, sich axial zur Häckseltrommel über die Breite des Gehäuses erstreckende, während des Häckselbetriebs öffenbare Öffnung aufweist, durch die Luft von außen in den Innenraum des Gehäuses einströmen kann.

### Stand der Technik

Häckseltrommeln werden in der Landwirtschaft in Feldhäckslern verwendet, um von einem Feld aufgenommenes Erntegut zu zerkleinern, das in der Regel als Viehfutter oder zur Biogaserzeugung verwendet wird. Die Häckseltrommel zerkleinert das Erntegut in einem hackenden oder ziehenden Schnitt durch um den Umfang ihres Trommelmantels verteilte Messer, die mit einer Gegenschneide zusammenwirken und übt auch eine gewisse Förderwirkung auf das Erntegut aus, das in der Regel stromab der Häckseltrommel durch eine Fördervorrichtung in Form eines Gebläses übernommen und in einen Austragschacht gefördert wird, durch den es im freien Flug in einen Transportbehälter gelangt. Zwischen der Häckseltrommel und der Fördervorrichtung kann ein Körnerprozessor angeordnet sein, der in geerntetem Mais enthaltene Körner anschlägt, damit sie besser verdaubar sind. Die Förderwirkung der Häckseltrommel beruht zu einem gewissen Teil auf mitgeförderter Luft. Die Unterstützung der Förderung durch die mitgeförderte Luft ist insbesondere dann erforderlich, wenn das Erntegut aus leichteren und kleineren Teilchen besteht.

Zur Verbesserung der Förderwirkung der Häckseltrommel wurde vorgeschlagen, die vorlaufenden Seiten der Messer (DE 199 18 553 A) oder auf dem Trommelmantel zwischen den Messern angeordnete Elemente mit abgerundeten vorlaufenden Flächen (EP 0 846 412 A) oder auf einer offenen Trommel zwischen den Messern angeordnete Platten (DE 76 09 165 U) als Luftschaufelelemente zu verwenden. Diese Häckseltrommeln wirken demnach als Tangentialgebläse, leiden aber oftmals an mangelnder Luftzufuhr, die lediglich an der Eingangsseite der Häckseltrommel durch den relativ engen Einzugskanal vorgesehen ist.

Weiterhin wurde vorgeschlagen, Luft durch eine seitliche Öffnung des Gehäuses der Häckseltrommel anzusaugen und durch die Messer und/oder zusätzliche Luftförderelemente zu beschleunigen (DD 287 599 A, DD 257 005 A, DD 243 421 A, DD 216 606 A, DE 1 986 843 U). Derartige Häckseltrommeln arbeiten als Axialgebläse und leiden unter der Problematik, dass die Luftzufuhr (und damit die Förderwirkung) im mittleren Bereich der Häckseltrommel zumindest dann mangelhaft ist, wenn zwecks größerer Gutdurchsätze breitere Häckseltrommeln verwendet werden.

Gebräuchliche Häckseltrommeln sind in Gehäusen angeordnet, an deren Oberseite sich zwischen einer geschlossenen und einer geöffneten Stellung bewegliche Klappen befinden. Beim Häckselbetrieb ist die Klappe geschlossen. Sie wird nur geöffnet, um die Messer der Häckseltrommel zu schleifen (s. beispielsweise EP 1 520 464 A).

Schließlich zeigt die Figur 1 der als gattungsbildend angesehenen DE 23 20 126 A einen Feldhäcksler mit einer Häckseltrommel, in deren Gehäuse im Abwurfbereich der Häckseltrommel eine sich axial erstreckende Öffnung vorgesehen ist. Hier besteht die Gefahr, dass Erntegut in unerwünschter Weise durch diese Öffnung austritt. Außerdem erfolgt die Luftzufuhr erst im Abwurfbereich der Häckseltrommel, was zu Verwirbelungen in diesem Bereich führt, die die Förderwirkung beinträchtigen.

### Aufgabe

Das der Erfindung zu Grunde liegende Problem wird darin gesehen, eine Häckseltrommelanordnung eingangs genannter Art dahingehend zu verbessern, dass eine verbesserte Förderwirkung erzielt wird.

### Lösung

Dieses Problem wird erfindungsgemäß durch die Lehre des Patentanspruchs 1 gelöst, wobei in den weiteren Patentansprüchen Merkmale aufgeführt sind, welche die Lösung in vorteilhafter

### Weise weiterentwickeln.

Eine Häckseltrommelanordnung umfasst eine um ihre Längsachse in Drehung versetzbare Häckseltrommel mit um ihren Umfang verteilten Messern und ein die Häckseltrommel umschließendes Gehäuse, in dem sich ein Einlass und ein Auslass für das zu häckselnde bzw. gehäckselte Material befinden, bei dem es sich insbesondere um Erntegut handelt. Das Gehäuse umfasst eine weitere Öffnung (oder mehrere derartige Öffnungen), die sich bezüglich der beim Häckselbetrieb verwendeten Drehrichtung der Häckseltrommel zwischen dem Auslass und dem Einlass befindet und zumindest während des Häckselbetriebs geöffnet ist. Die weitere Öffnung erstreckt sich axial über die Breite der Häckseltrommel und ermöglicht es, dass Luft von außen in das Gehäuse der Häckseltrommel einströmt. Die Häckseltrommel arbeitet demnach als Tangentialgebläse mit einer zusätzlichen, durch die Öffnung bereitgestellten Luftzufuhr.

Auf diese Weise erfolgt die Luftzufuhr in einem nicht oder nur sehr wenig mit Häckselmaterial beladenen Bereich der Häckseltrommel und weit stromauf des Auslasses. Die Bildung unerwünschter Wirbel am Auslass wird vermieden.

Um zu verhindern, dass von der Häckseltrommel stromab des Auslasses noch mitgeführtes Häckselmaterial durch die Öffnung nach außen austritt, bietet es sich an, der Öffnung einen durch Wände begrenzten Kanal vorzuordnen. Dazu wird der Kanal in einer etwa tangentialen Richtung an den Umfang der Häckseltrommel und in einer gegenüber der Drehrichtung der Häckseltrommel beim Häckselbetrieb nachlaufenden Richtung angeordnet. Dadurch wird die innerhalb des Trommelgehäuses verbliebene Luft durch die schaufelartigen Elemente am Trommelmantel schnell an der Öffnung vorbeibewegt. Da die Luft außerhalb des Trommelgehäuses eine wesentlich geringere oder keine Strömungsgeschwindigkeit aufweist, entsteht an der Öffnung des Kanals ein Unterdruck. Er bewirkt, dass durch die gewählte Form der Kanalbegrenzung von der Häckseltrommel näherungsweise tangential Luft 94 durch den Kanal eingesaugt wird.

Die Wand des Kanals wird vorzugsweise derart geformt, dass der eingesaugte Luftstrom in Richtung auf das Innere der Häckseltrommel geleitet wird, damit insbesondere am Auslass ein möglichst hoher, laminarer Luftstrom entsteht. Dazu kann die bezüglich der beim Häckselbetrieb geltenden Drehrichtung der Häckseltrommel rückwärtige Wand des Kanals in einem unmittelbar vor der Öffnung liegenden Bereich einen größeren Winkel zur Tangente an den Umfangskreis der Häckseltrommel einschließen als die übrigen Bereiche dieser Wand. Am stromab liegenden Ende der Wand wird der Luftstrom demnach in einem gewissen Maß radial zur Mitte der Häckseltrommel hin abgelenkt.

Bei einer bevorzugten Ausführungsform der Erfindung ist der Kanal mit einem Schleifkammerraum verbunden, in dem sich eine Schleifeinrichtung befindet. Dadurch erreicht man, dass sich im Schleifkammerraum ansammelnde Partikel, bei denen es sich vornehmlich um Häckselgutteilchen handelt, die beispielsweise durch kleine Öffnungen und Spalte zwischen dem Gehäuse der Häckseltrommel und einer Abdeckklappe des Schleifkammerraums eindringen können, durch den Kanal zur Häckseltrommel hin abgesaugt und durch den Austragschacht abgefördert werden. Dadurch erzielt man zusätzlich den Vorteil, dass die Brandgefahr durch beim Schleifen der Messer entstehende Funken vermindert wird.

Die Abdeckklappe ist üblicherweise zwischen dem Gehäuse der Häckseltrommel und dem Schleifkammerraum angeordnet und zwischen einer geöffneten und geschlossenen Stellung bewegbar. Sie wird während des Häckselbetriebs geschlossen und während des Schleifbetriebs geöffnet, sei es manuell oder durch einen zugeordneten Aktor, der durch eine selbsttätig arbeitende Steuerung kontrolliert wird.

Zur geordneten Absaugung der Partikel aus dem Schleifkammerraum trägt eine Abdeckung bei, die den Schleifkammerraum auf der vom Gehäuse abgewandten Seite abschließt und an ihrer Rückseite mit dem Gehäuse und/oder an ihrer Vorderseite mit dem Kanal mindestens einen sich axial zur Häckseltrommel erstreckenden Spalt bildet. Durch diesen Spalt bzw. diese Spalte wird Luft in den Schleifkammerraum und von dort in den Kanal und in die Öffnung eingesaugt. Die durch die Lage der Spalte und der Abdeckung entstehende Luftströmung führt zu einer den Schleifkammerraum reinigenden Luftströmung.

Bei einer bevorzugten Ausführungsform der Erfindung wird dem Luftstrom stromauf der Öffnung durch geeignete Düsen oder dgl. ein Siliermittel zugeführt.

Die Öffnung ist vorzugsweise permanent geöffnet. Es wäre aber auch denkbar, sie insgesamt oder über einen Teil ihrer Breite und/oder Länge wahlweise durch Blenden oder andere Abdeckungen zu verschließen (manuell oder durch einen zugeordneten Aktor, der vorzugsweise durch eine selbsttätig arbeitende Steuerung kontrolliert wird), wenn ein zusätzlicher Luftstrom nicht oder nur in geringerem Maße benötigt wird, beispielsweise bei der Maisernte, bei der in der Regel nur relativ schwere Teilchen zu fördern sind. Die größten Vorteile durch die zusätzliche Luftströmung bietet die Öffnung hingegen bei der Grasernte, bei der relativ leichte Partikel zu fördern sind.

### Ausführungsform

In den Zeichnungen ist ein nachfolgend näher beschriebenes Ausführungsbeispiel der Erfindung dargestellt. Es zeigt:
- Fig. 1: eine Seitenansicht eines Feldhäckslers mit einer Häckseltrommelanordnung,
- Fig. 2: einen vergrößerten seitlichen Schnitt durch die Häckseltrommelanordnung, und
- Fig. 3: eine perspektivische, frontseitige Ansicht der Häckseltrommelanordnung.

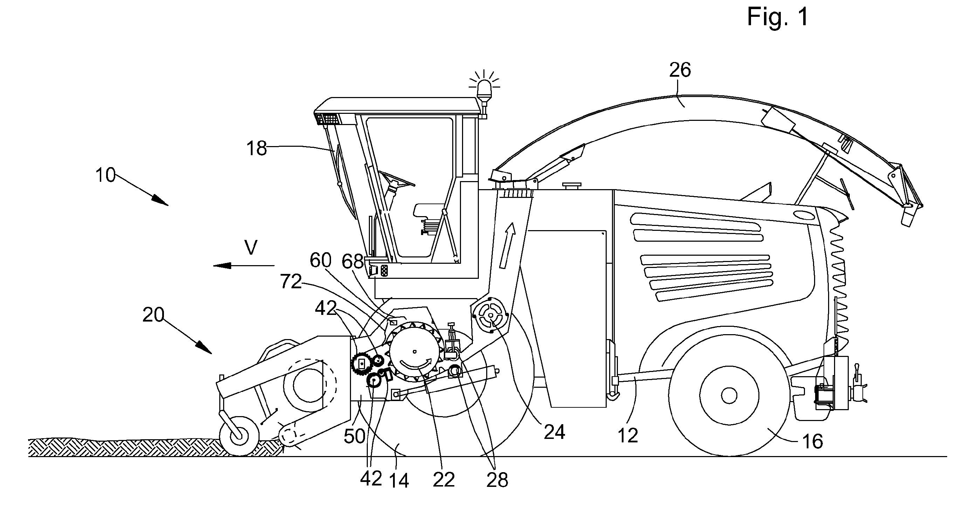

In der Figur 1 ist ein selbstfahrender Feldhäcksler 10 dargestellt. Er baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz in Form eines Schwadaufnehmers 20 einsehbar ist. Mittels des Schwadaufnehmers 20 vom Boden aufgenommenes Erntegut, z. B. Gras oder dergleichen, wird über einen Einzugsförderer 42 mit Vorpresswalzen, die innerhalb eines Einzugsgehäuses 50 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird.

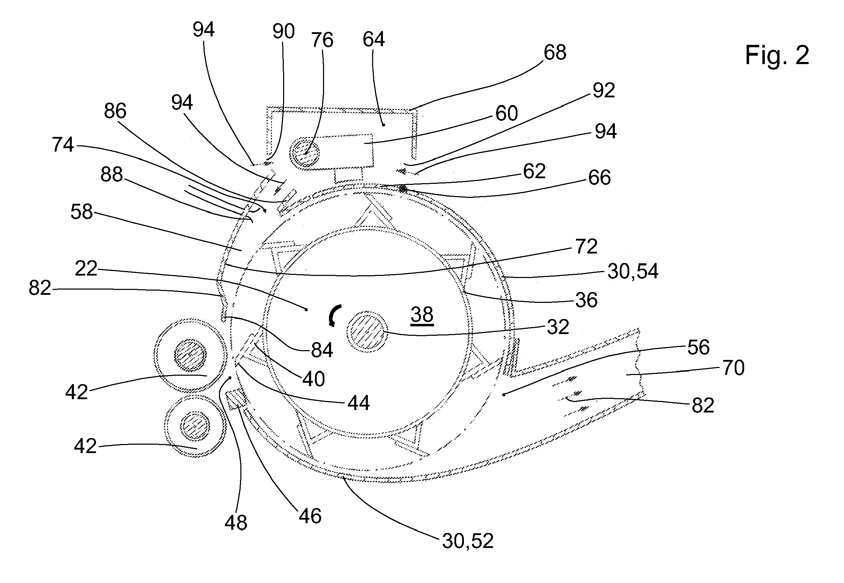

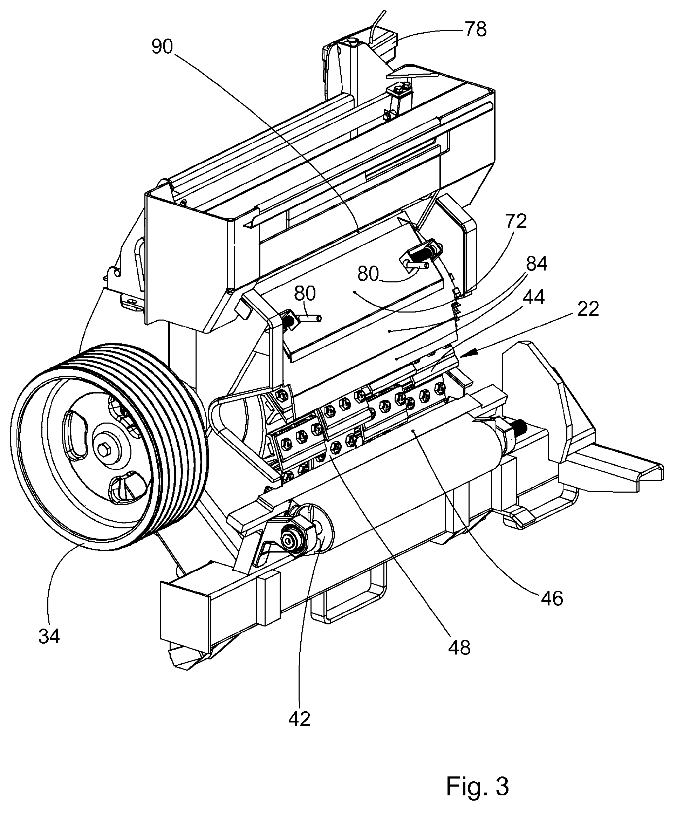

Die Häckseltrommelanordnung mit der Häckseltrommel 22 und einem sie umgebenden Gehäuse 30 ist in der Figur 2 detaillierter dargestellt. Die Häckseltrommel 22 umfasst eine mittige Welle 32, die im Rahmen 12 des Feldhäckslers 10 drehbar gelagert und über eine Riemenscheibe 34 (s. Figur 3) und einen zugehörigen Treibriemen (nicht gezeigt) von einem Verbrennungsmotor (nicht gezeigt) in Drehung versetzbar ist. Die Welle 32 ist über Stützscheiben 38 drehfest mit einem Trommelmantel 36 verbunden, um dessen Umfang und Breite Messerhöcker 40 verteilt sind, an denen Messer 44 angeschraubt sind, die das Häckselgut im Zusammenwirken mit einem Gegenmesser 46 zerkleinern, das sich am Einlass 48 des Gehäuses 30 befindet. Das Gehäuse 30 umfasst ein unteres Gehäuseteil 52 und ein oberes Gehäuseteil 54, die sich koaxial zur Häckseltrommel 22 erstrecken und neben dem vorderen Einlass 48, der unmittelbar rückwärtig der hinteren Vorpresswalzen des Einzugsförderers 42 angeordnet ist, und dem rückwärtigen, in einen zur Nachzerkleinerungsvorrichtung 28 führenden Schacht 70 übergehenden Auslass 56 eine weitere Öffnung 58 bilden.

An der Oberseite des Gehäuses 30 ist eine Schleifeinrichtung 60 angeordnet, die sich in einem Schleifkammerraum 64 befindet, welcher durch eine Abdeckklappe 62, die um eine horizontal und parallel zur Drehachse der Welle 32 verlaufende Achse 66 schwenkbar ist, von der Häckseltrommel 22 getrennt ist. Der Schleifkammerraum 64 wird nach oben hin durch eine Abdeckung 68 abgedeckt, die ein U-förmiges Profil mit einem mittigen, horizontalen Schenkel und zwei vertikalen, sich vom mittigen Schenkel nach unten erstreckenden Schenkeln bildet. Letztere enden in einem gewissen Abstand oberhalb des oberen Gehäuseteils 54 bzw. oberhalb einer rückwärtigen Wand 72 eines vom Schleifkammerraum 64 zur Öffnung 58 führenden Kanals 74. Die in Fig. 2 U-förmig dargestellte Abdeckung 68 des Schleifkammerraums 64 kann von der dargestellten Form abweichende Formen und auch weitere Öffnungen z. B. auch im Oberteil aufweisen. Der Kanal 74 erstreckt sich fast tangential zum Umfang des von der Häckseltrommel 22 beschriebenen Hüllkreises und entgegen ihrer Drehrichtung nach hinten. Die rückwärtige Wand 72 ist in ihrem unteren, dem Einlass 48 und der Öffnung 58 benachbarten Bereich 82 in Richtung auf die Häckseltrommel 22 hin abgewinkelt. Der Bereich 82 schließt demnach einen größeren Winkel zur Tangente an den Umfang der Häckseltrommel 22 ein als die übrige Wand 72. Unterhalb des Bereichs 82 folgt wieder ein kurzer, sich tangential zur Häckseltrommel 22 erstreckender Bereich 84, der unmittelbar oberhalb des Einlasses 48 endet. Zwischen dem vorderen Ende der Abdeckung 68 und dem Schleifkammerraum 64 erstreckt sich eine vordere Wand 86 des Kanals 74. In den Kanal 74 mündet auch eine Leitung mit einer endseitigen Siliermittelzuführungseinrichtung 88 in Form entlang der Breite des Kanals 74 verteilter Düsen, durch die Siliermittel in den Kanal 74 injizierbar ist.

Die Schleifeinrichtung 60 selbst ist konventionellen Aufbaus und an sich aus der EP 1 520 464 A und den dort zitierten Referenzen bekannt. Die Abdeckklappe 62 kann geöffnet werden, wenn die Schleifeinrichtung 60 durch einen Antrieb 78 (s. Figur 3) entlang ihrer Achse 76 an ein seitliches Ende der Häckseltrommel 22 verfahren wurde, und befindet sich in der geöffneten Stellung innerhalb der Abdeckung 68. Dann kann die Schleifeinrichtung 60 durch den Antrieb 78 ein- oder mehrmals über die Breite der Häckseltrommel 22 verfahren werden, um die Schneidkanten der Messer 44 zu schleifen. Anschließend wird die Abdeckklappe 62 geschlossen.

Während des Häckselbetriebs befindet sich die Schleifeinrichtung 60 jedoch in ihrer in Figur 2 dargestellten Stellung und die Häckseltrommel 22 rotiert in Pfeilrichtung, so dass Häckselgut durch den Einlass 48 in das Gehäuse 30 eintritt und es in Richtung der Pfeile 82 durch den Auslass 56 und den Schacht 70 wieder verlässt. Da die Häckseltrommel 22 dabei Luft in den Schacht 70 abgibt und außerdem im Bereich der Häckseltrommel 22 verbleibende Luft mit um diese herumgeführt wird, entsteht im Bereich der Öffnung 58 ein Unterdruck und ein Sog, der Luft durch den Kanal 74 ansaugt. Diese Luft wird durch den vorderen Spalt 90 zwischen dem vorderen Schenkel der Abdeckung 68 und der vorderen Wand 72 des Kanals 74 einerseits und durch den hinteren Spalt 92 zwischen dem rückwärtigen Schenkel der Abdeckung 68 und dem oberen Teil 54 des Gehäuses 30 andererseits in den Schleifkammerraum 64 eingesaugt und gelangt von dort in den Kanal 74, wie durch die Pfeile 94 angedeutet. Dadurch wird zum Einen die Förderung des Häckselguts durch die Häckseltrommel 22 verbessert, insbesondere wenn leichtere Partikel zu fördern sind, wie bei der Grasernte, und zum Anderen wird der Schleifkammerraum 64 von sich dort anderenfalls ansammelnden Partikeln gereinigt, die beispielsweise durch den kleinen Spalt zwischen der Abdeckung 62 und dem oberen Teil 54 des Gehäuses 30 in den Schleifkammerraum 64 eindringen können. Der sich mehr radial als die übrige vordere Wand 72 erstreckende Bereich 82 lenkt den Luftstrom weiter zur Mitte der Häckseltrommel 22, was ihre Luftförderwirkung verbessert.

Es ist anzumerken, dass verschiedene Änderungen an der dargestellten Häckseltrommelanordnung möglich sind. Beispielsweise könnte die (bezüglich der Drehrichtung der Häckseltrommel 22) vordere Wand 86 des Kanals 74 entfallen, so dass dann die rückwärtige Kante der Abdeckklappe 62 eine rückwärtige Wand des Kanals 74 bildet. Die Häckseltrommel 22 könnte als offene Häckseltrommel ausgeführt sein, d. h. der Mantel 36 entfallen und die Messerhöcker 40 direkt an den Stützscheiben 38 angebracht werden. Weiterhin könnten die vorlaufenden Flächen der Messerhöcker 40 als Luftschaufelflächen ausgeführt sein, und/oder zwischen aufeinander folgenden Messerhöcker 40 und/oder (bei einer offenen Häckseltrommel) zwischen der Welle 32 und den Messern 44 separate Luftschaufelelemente angeordnet werden. Die Messer 44 können im hackenden oder ziehenden Schnitt arbeiten. Schließlich könnten, anders als in der dargestellten Ausführungsform, in der die Öffnung 58 permanent nach außen hin geöffnet ist, die Spalte 90, 92 und/oder der Kanal 74 in axialer und/oder Querrichtung wahlweise durch Blenden teilweise oder ganz verschlossen werden, die manuell durch den Bediener des Feldhäckslers betätigt werden, sei es von der Kabine aus oder direkt vor Ort. Diese Blenden können auch durch Aktoren und eine damit verbundene automatische Steuerung betätigt werden, die mit Messwerten hinsichtlich der Ernteguteigenschaften (insbesondere der Teilchengröße) und/des Luftstroms im Schacht 70 beaufschlagt wird und die Aktoren anhand der Messwerte ansteuert.

Die vordere Wand 72 ist mittels federbelasteter Stifte 80 an der Seitenwand des Gehäuses 30 befestigt und demnach abnehmbar. Es ist möglich, sie durch eine andere, nicht gezeigte Wand 72 zu ersetzen, die unmittelbar dem Umfang der Häckseltrommel 22 folgt und demnach keinen Kanal 74 bildet. Diese Wand eignet sich für schwereres Erntegut, wie Mais.

## Patentansprüche

1. Häckseltrommelanordnung mit:
einer Häckseltrommel (22), die um ihre Längsachse drehbar abgestützt und antreibbar ist und um ihren Umfang verteilte Messer (44) aufweist, und
einem die Häckseltrommel (22) umschließenden Gehäuse (30), das einen Einlass (48) für zu häckselndes Material, einen Auslass (56) für gehäckseltes Material und eine weitere, sich axial zur Häckseltrommel (22) über die Breite des Gehäuses (30) erstreckende, während des Häckselbetriebs öffenbare Öffnung (58) aufweist, durch die Luft von außen in den Innenraum des Gehäuses (30) einströmen kann,
**dadurch gekennzeichnet, dass** die Öffnung (58) bezüglich der beim Häckselbetrieb geltenden Drehrichtung der Häckseltrommel (22) zwischen dem Auslass (56) und dem Einlass (48) angeordnet ist.

2. Häckseltrommelanordnung nach Anspruch 1, **dadurch gekennzeichnet, dass** der Öffnung (58) ein durch Wände (72, 86) begrenzter Kanal (74) vorgelagert ist, der sich nachlaufend zur beim Häckselbetrieb geltenden Drehrichtung der Häckseltrommel (22) und näherungsweise tangential zum Umfang der Häckseltrommel (22) erstreckt.

3. Häckseltrommelanordnung nach Anspruch 2, **dadurch gekennzeichnet, dass** die bezüglich der beim Häckselbetrieb geltenden Drehrichtung der Häckseltrommel (22) rückwärtige Wand (72) des Kanals (74) in einem unmittelbar vor der Öffnung (58) liegenden Bereich (82) einen größeren Winkel zur Tangente an den Umfang der Häckseltrommel (22) einschließt als die übrige Wand (72).

4. Häckseltrommelanordnung nach Anspruch 2 oder 3, **dadurch gekennzeichnet, dass** der Kanal (74) in einem Schleifkammerraum (64) anfängt, in dem sich eine Schleifeinrichtung (60) befindet.

5. Häckseltrommelanordnung nach Anspruch 4, **dadurch gekennzeichnet, dass** das Gehäuse (30) eine zwischen einer geöffneten und geschlossenen Stellung bewegbare, dem Schleifkammerraum (64) benachbarte Abdeckklappe (62) umfasst, die während des Häckselbetriebs geschlossen ist und während des Schleifbetriebs geöffnet ist.

6. Häckseltrommelanordnung nach einem der Ansprüche 2 bis 5, **dadurch gekennzeichnet, dass** eine rückwärtige Wand (72) des Kanals (74) lösbar befestigt und gegen eine Häckseltrommelabdeckung ohne Kanal (74) austauschbar ist.

7. Häckseltrommelanordnung nach einem der Ansprüche 4 bis 6, **dadurch gekennzeichnet, dass** der Schleifkammerraum (64) auf der vom Gehäuse (30) abgewandten Seite durch eine Abdeckung (68) begrenzt ist, die mit dem Gehäuse (30) und/oder einer Wand (72) des Kanals (74) mindestens einen sich axial zur Häckseltrommel (22) erstreckenden Spalt (92, 90) bildet, durch den Luft in den Schleifkammerraum (64) und von dort in den Kanal (74) und in die Öffnung (58) eingesaugt werden kann.

8. Häckseltrommelanordnung nach einem der vorhergehenden Ansprüche, **dadurch gekennzeichnet, dass** der Öffnung (58) und/oder dem Kanal (74) eine Siliermittelzuführungseinrichtung (88) zugeordnet ist.

9. Häckseltrommelanordnung nach einem der vorhergehenden Ansprüche, **dadurch gekennzeichnet, dass** die Öffnung (58) unverschließbar ist.

10. Feldhäcksler (10) mit einer Häckseltrommelanordnung nach einem der vorhergehenden Ansprüche.
